# EUROPEAN PATENT APPLICATION

(11) **EP 2 790 428 A2**
(43) Date of publication of application: **15.10.2014**
(21) Application number: 12856337.6
(22) Date of filing: 05.12.2012
(51) Int. Cl.: H04W 12/00

(54) **DEVICE AND METHOD FOR THE SECURE TRANSMISSION OF DATA OVER Z CHANNELS USING CDMA**

(30) Priority: 05.12.2011 AR P110104539
(71) Applicant: Instituto Tecnológico de Buenos Aires, Buenos Aires (AR); Martínez Buitrago, Jenyfeer A., Bogotá (CO)
(72) Inventor: ALVAREZ HAMELIN, Jóse, Ignacio, Ciudad Autónoma de Buenos Aires (AR); BETTACHINI, Victor, Alexis, Buenos Aires (AR); ORTEGA, Alfredo, Buenos Aires (AR)
(74) Representative: ABG Patentes, S.L.
(86) International application number: PCT/IB2012/057003
(87) International publication number: WO 2013/084172

(57) **Abstract**

The present invention relates to a device for safe data transmission over Z channels employing CDMA, which comprises:
α.
means for symbol re-encoding through expansion thereof;
β.
means for encoding using error correction techniques;
χ.
means for transmission using *Time-Hopping* CDMA based on a nonlinear pseudo-random generator with secure password and Bloom filters, and
δ.
means for channel modulation, both optical and wireless.

The invention is based on the surprising fact that channel utilization can be substantially improved in the case of data transmission over Z channels employing CDMA, by the use of symbol re-encoding through expansion thereof, error correction techniques and bit encoding according to a nonlinear pseudo-random generator with secure password.

## Description

### Field of the Invention

The present invention relates to a device and method for secure data transmission over Z channels employing CDMA which uses symbol re-encoding through their expansion, error correction techniques and bit encoding according to a non-linear pseudo-random generator with secure password.

### Background of the Invention

Wired or wireless access networks are of vital importance in today's society as they provide diverse ways to access communication media such as Internet, voice and video. For instance, passive optical networks (PONs) provide a reliable method that supports voice, data and video communications, known as the *Triple -Play* paradigm (IEEE 802.ah, ITU G.983, ITU G.984 standards). However, the communication methods used today using multiplexing time division are inherently insecure in the sense that they do not provide protection of their users communications from a sufficiently motivated casual listener. PONs are an example of this as their most used methodology for transmission is based on multiplexation through time division (TDMA), a scheme in which all data signals are broadcast to all the receiving units in the network regardless of they were the legitimate recipients of those signals or not. This problem is also present in wireless networks, worsened by the fact that the transmission medium is easy to intercept. This motivated the implementation of security schemes by the communicating *end-points* of a network on upper layer protocols (of the open interconnection systems model, OSI/ISO).

In cases where such security protocols are non-existent or wrongfully configured, data traffic is only protected by security schemes implemented at the physical layer. There have been some proposals in such sense particularly for optical networks. Some are based on data encryption through optical encoding (K. Ohhata, O. Hirota, M. Honda, S. Akutsu, Y. Doi, K. Harasawa and K. Yamashita. 10-GB/s optical transceiver using the Yuen 2000 encryption protocol. J. lightw. Technol., 28:2714-2722, September 2010), while others rely on code division multiple access, hereinafter CDMA in this application *(Code Division Multiple Access)* (Z. Wang, L. Xu, J. Chang, T. Wang, and P. R. Prucnal. Secure optical transmission in a point-to-point link with encrypted cdma codes. Photonics Technology Letters, IEEE, 22 (19): 1410 -1412, Oct. 2010).

Various patent documents have proposed using such encoding through the application of CDMA using, generally, validation and authentication methods by identification purposes. These are generated by algorithms which generate random numbers or, alternatively, by the combination of keys by hash functions, as shown in applications WO 2010/060456 A1, US 2009/0313476 A1, US 2008/0115036 A1, US 2006/0129814 A1, WO 2006/069536 A1 and US 2009/049532 A1.

A significant improvement in the implementation of CDMA for the security of optical networks which encode data with a Jump in Time algorithm on bit level, hereinafter *Time-Hopping,* is the use of Error Correction Techniques on the Receiver or Error Correction Techniques without Return Channel (FEC: *Forward Error Correction*), implemented with the goal of minimizing the Bit Error Rate (*BER*) (A. Ortega, V. Bettachini, J.I. Alvarez-Hamelin and D. Grosz "Point-to-Point and Point-to-multipoint CDMA Access Network with Enhanced Security" arXiv:0912.5324v3 [http://arxiv.org/abs/0912.5324v3] February 3, 2011).

In this approach an implementation of CDMA was proposed, capable to support both point-to-point as well as point-to-multipoint communications with up to 128 client terminals, that could transmit simultaneously at rates of at least 12 Mbps within a range of 20km, responding so to the needs of the access network.

This proposal provided security at the lowest OSI/ISO standard, the physical layer, without this preventing the implementation of an additional security protocols in upper layers. The improvement in confidentiality allows supporting additional protocols such as virtual local area network (*VLAN*), which is impossible with common PONs architectures (e.g., IEEE 802.ah, ITU G.983, ITU G.984).

### Brief Description of the Invention

It has now been found, and it is an object of the present invention, that data can be transmitted to multiple users, for instance 128, 256, 512 or more, employing CDMA on Z type channels in a secure fashion at low error rates, while sustaining a high utilization of the channel for such type of systems, for example greater than 30%. The term "Z type channels" refers to channels that produce errors in only one the possible binary bit states, in this case only '0' transmitted bits may be overlapped by a single or multiple '1's, thus an error is registered, but an overlapped '1' either with a '0' or '1' bit is received as '1'.

According to the present invention, the encoding of data employing CDMA, specifically *Time-Hopping* CDMA based on a non-linear pseudo-random generator with secure password, along with the re-encoding application of symbols through its expansion, and error correction techniques, allows for improvement of network immunity, either of the optical or wireless kind, when facing a variety of data privacy attacks.

The error correction techniques may be those usually used in prior art, such as Reed-Solomon, LDPC *(Low Density Parity Check*) and BCH (known as such based on the initials of its inventors: Bose, Ray-Chaudhuri and Hocquenghem).

Likewise, it has been found that by using symbol re-encoding through its expansion in conjunction with Bloom filters and error correction techniques, channel utilization for those systems increases.

The re-encoding of data consists of the replacement of a symbol (bit sequence) with an equivalent symbol of greater length. This is done to the effects of reducing Hamming weight, which is defined as the number of bits, apart from zeros, in the sequence. In communications using a Z type channel, errors occur only in the '0' bit, which is the reason why symbols are used to minimize the Hamming weight (i.e., which contain a larger amount of '0' bits).

The error correction algorithms may be those usually used in prior art, such as Reed-Solomon, LDPC *(Low Density Parity Check*) and BCH (known as such from the initials of their inventors: Bose, Ray-Chaudhuri and Hocquenghem).

The Bloom filter repeats the bit to transmit k times in the channel, therefore only one correct reception of one of these copies is sufficient to correctly recover the original bit. In particular, if the symbol is a byte (8 consecutive bits), instead of transmitting the 256 possible symbols, each of them is replaced by the corresponding re-encoding in following manner: taking a sequence of a 24 bits, it is possible to find 256 symbols with exactly two bits in '1', therefore the average number of bits in '1' is 2, while in the original sequences of 8 bits is 4. Furthermore, given that most part of the sequence is composed of '0' bits, several bits can be transmitted in each frame in such a way that the transmission rate is not reduced.

Consequently, it is an object of the present invention to provide a device for secure data transmission over Z channels employing CDMA that involves:
α. means for re-encoding symbols through expansion thereof;
β. means for encoding through error correction techniques;
χ. means for transmission employing Time-Hopping CDMA and Bloom filters based on a non-linear pseudo-random generator with secure password and Bloom filters, and
δ. means for channel modulation, both optical and wireless.

In a preferred embodiment, the error correction technique is Reed-Solomon with scrambler.

In another preferred embodiment of the invention, the device of the invention is integrated into optical networks.

In a more preferred embodiment of the invention, the optical network presents a stage of optical amplification.

In a further preferred embodiment of the invention, the optical amplifiers are erbium doped fiber amplifiers (EDFA).

In another most preferred embodiment of the invention, the optical network presents a star-type coupler, without amplification stage.

In an embodiment of the invention, even more preferred, in an optical network, modulation is performed so that the '1' is represented with the presence of light and the '0' without light.

A substantial advantage of the present invention compared to prior art mentioned, consists in that the device of the invention can be applied in wireless networks.

Consequently, in another preferred embodiment of the invention, the device is integrated into wireless networks.

In a more preferred embodiment of the invention, the wireless channel modulation is performed using an amplitude modulation (AM) 100% of a'1' bit carrier and 0% for the '0' bit.

In a more preferred embodiment of the invention, sonic or ultrasonic signals are used, wherein the representation of the '1' bit is accomplished by transmitting of a tone during an interval of one bit duration, while the '0' bit will be represented by the absence of said tone.

In still another preferred embodiment of the invention, the means for bit re-encoding according to a nonlinear pseudo-random generator with secure password, meaning greater than 2 to the power 128, are a *self-shrinking* generator (W. Meier and O. Staffelbach, "The self-shrinking generator," in Advances in Cryptology-EUROCRYPT'94, A. De Santis, Berlin: Springer, 1994, pp. 205-214).

Another object of the present invention is a method of secure transmission of data over Z channels employing CDMA Z, comprising:
1. in the data link layer (according to the OSI/ISO model)
   a. data entry, data re-encoding through the expansion of its symbols,
   b. addition of bits for error correction,
   c. transmission employing CDMA with pseudo random slot allocation to each channel so that only authorized client terminals can decode the channel, *Time Hopping* and *Bloom filters,* and
   d. channel modulation, and
2. on the physical layer (according to the OSI/ISO model),
   a. distribution of data traffic coming from each client terminal to all other terminals, either by optical splitters with or without amplification, or using a broadcast transmission medium (*broadcast*) like the air, allowing both the point-to-multipoint communications and point-to-point, and
   b. in the case of optical networks, the optical power is amplified on the physical layer through amplifiers, which increase it to counteract losses in the network, or
   c. in the case of optical network, one star coupler is implemented on the physical layer for all the client terminals, or other topologies of bus or ring type is used.

### Brief description of the drawings

The **Figure 1** shows the general scheme of the invention device, corresponding to data encoding and decoding.
The **Figure 2** shows the physical architecture of the invention device in a case of one optical channel with amplification.
The **Figure 3** shows another embodiment of the invention device in the case of the optical channel without the amplification stage.
The **Figure 4** shows another embodiment of the invention device in a wireless case.
The **Figure 5** shows the operation of the Z channel in the case of an optical fiber.
The **Figure 6** shows the result of an experiment in which 128 customers transmitted simultaneously over the same optical fiber so as to represent the physical media and the physical phenomena that take place on the transmitted light waves.
The **Figure 7** shows a general schema of the invention device, corresponding to the data encoding and decoding at 30% channel utilization.
The **Figure 8** shows Hamming weight normalization, from a shorter length to a longer length while maintaining the same weight.

### Detailed Description of the invention

The invention will be now described in more detail by referring to the attached figures.

The device of secure data transmission on Z channels employing CDMA of the present invention comprises:
α. Means for the re-encoding of symbols through its expansion;
β. means for encoding using error corrections codes, for example Reed-Solomon with scrambler;
χ. means for bit encoding according to a non-linear pseudo-random generator with secure password, meaning being greater than 2 to the power 128 and *self-shrinking* -type generators;
δ. means for the transmission employing CDMA *Time-Hopping* and Bloom filters;
ε. means for channel modulation, both optical and wireless;
φ. means for channel demodulating, both optical and wireless;
y. means for playback employing CDMA *Time-Hopping* and Bloom filters;
η. means for bit decoding according to a non-linear pseudo-random generator with secure password, meaning it is greater than 2 to the power 128 and *self-shrinking* type generators;
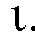 means for decoding using error correction codes, for example Reed-Solomon with scrambler and
ϕ. means for decoding of the spread symbols.

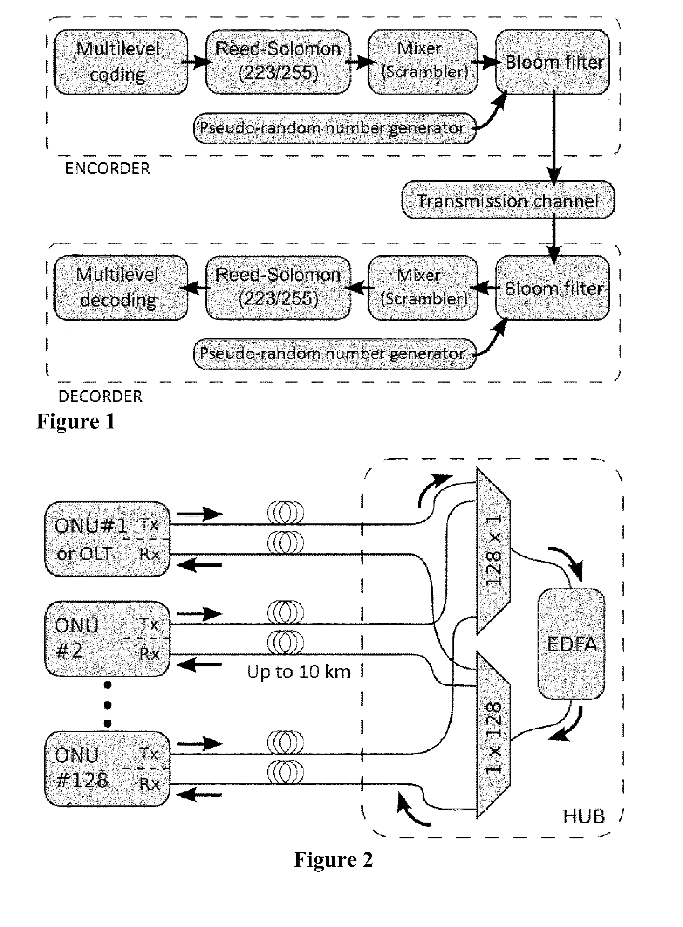

Referring to Figure 1, the general scheme of the invention device is shown, corresponding to the coding and decoding of data, wherein the steps of transmission and reception are shown, starting from the data flow to be sent and ending in the reception of said flow. In particular, it illustrates the case where the error correction is implemented with a combination of Reed-Solomon with scrambler.

Referring to Figure 2, it shows the physical architecture of the invention device in a case of the optical channel with amplification. In this case each client terminal is connected up to a distance of 10km away from the concentrator (HUB), which is made up of two passive splitters and an amplifier.

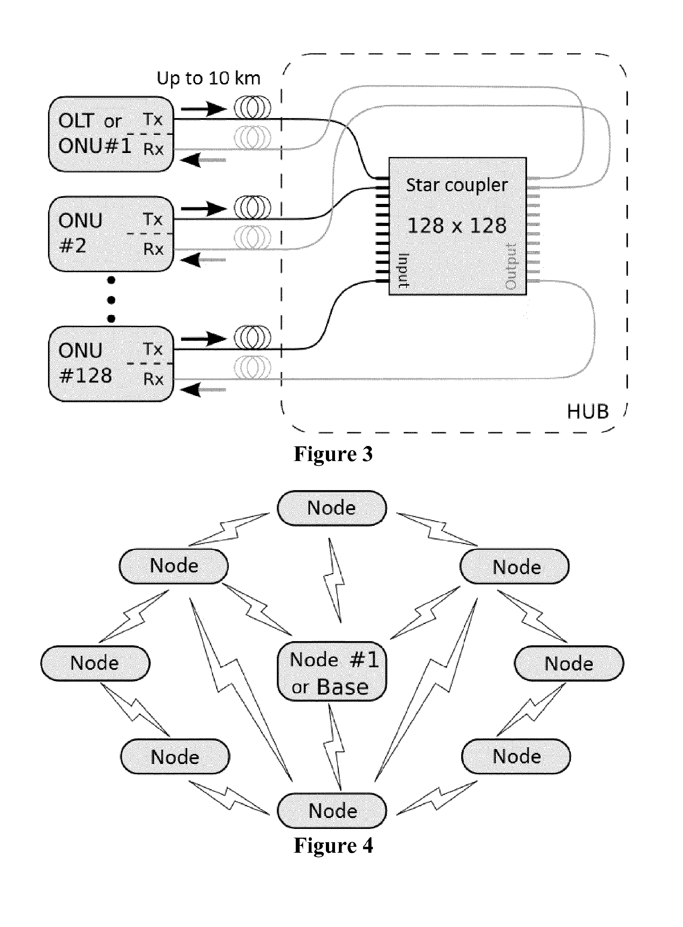

Figure 3 shows an analog case to that of Figure 2, namely another embodiment of the invention device in the case of the optical channel, but without the amplification step, because it utilizes a star coupler with 128 ports. This embodiment illustrates the case that most similar to a network of type PON.

Figure 4 shows another embodiment of the invention device in a wireless case, namely where the transmission medium is air. In this embodiment all client terminals can communicate with each other, that is they share the coverage area, which implicates that all client terminals must be in the coverage area of the others.

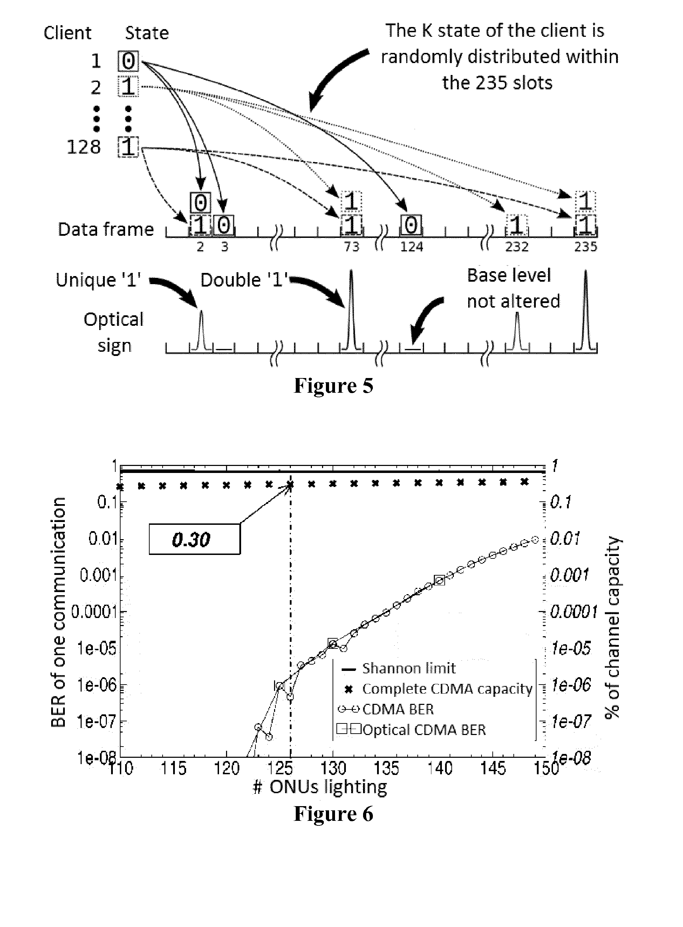

Figure 5 details the functioning of *time-hopping* and the Z channel in an optical fiber. The 128 client terminals write into the frame slots being possible to overlaid the transmissions. If all client terminals send a '1', a '1' is received, consequently there is no error. The error occurs in the case if a '0' is overlaid with a '1' because a '1' is always received.

Figure 6 shows the result of an experiment where 128 customers simultaneously transmitting over the same optical fiber, so as to represent the physical media and the physical phenomena that take place on the transmitted light waves.

It is defined as the set of bits to be transmitted that represents a time slot. In this example was considered a one bit frame of 235 slots, with a Bloom filter and K=9 and a symbol length of 400 bits to represent symbols of 16 bits (two bytes), so that each symbol has only two bits in '1' and the rest in '0'. The BER is schematized for each channel in function of the number of client terminals transmitting. In turn, on the right Y axis the utilization percentage of the channel is schematized after the error correction was applied. It is important to notice that for the 30 % utilization of the channel there are 126 client terminals transmitting with a BER per channel of 4.5E-7, where the transmission rate of each channel is 23.44Mbps. The channel notion corresponds, in this context to a transmission from one client terminal to another in one direction only. The results of this experiment were obtained with a 1 GB data transmission.

### Example 1

In this example the implementation of the invention device is described in an optical network.

Slots are assigned in pseudo-random way to each channel, so that only the client terminals authorized to decode can decode the channel. To each channel is assigned a nonlinear pseudo-random generator (not necessarily the same). Two or more channels must share the secret password (usually the seed) of the pseudo-random number generator (PRNG: *Pseudo-Random Number Generator)* to make predictable the slot sequence and make possible the communication between them. The PRNG must be cryptographically secure, for example and preferably the *self-shrinking* generator. In the same way AES can be utilized *(Advanced Encryption System)* in mode PRBS *(Pseudo Random Binary Sequence).*

The invention device consists of a data link layer which is implemented using *Time Hopping* CDMA, where each of the 128 possible client terminals send bits to a slot selected at random from among the 235 slots (see Figure 5), therefore the collisions between different client terminals occur and error correction techniques have to be used to guaranty the data transmission free of errors. In the present invention was used Reed-Solomon in conjunction with a scrambler. 400 bits were used to encode symbols of 16 bits (selecting those with up to two bits in '1' and the rest in '0' of length 400 bits), transmitting 16 bits per frame, so that 25 frames are used for transmitting the original 16 bits. A given client terminal X can receive messages from a client terminal Y, if X has the password for Y and vice versa. Therefore any client terminal can receive the transmissions from all other when disposing of their passwords.

The data flows from the client terminals are encoded with the error correction technique, Reed-Solomon code with a scrambler and additionally Bloom filters. The choice of these correction algorithms was influenced by the modeling of the optical fiber as a Z channel. As mentioned above, this channel has the property that only errors occur in only one bit type, for example if the bit '0' is represented by the signal absence while the '1' is represented by signal presence (in this case using RZ, *Return to Zero)* errors would occur only at the reception of the '0'. In this channels type the utility of Bloom filters reside in that K=9 copies of each bit are sent within the same frame, so that in the case of a bit '0' it is enough to receive '0' in any of the K=9 copies to be correct, whereas the '1' do not present inconveniences.

### Example 2

In this example is described the implementation of the device invention in a wireless network.

In this case the physical medium is air, (see Figure 4) and requires that all client terminals are in the same coverage area to be able to provide possible relatedness between any of them. It is important to note that this channel is a broadcast medium. Here the '1' bits are represented with a modulated carrier at 100% amplitude, and the '0' bits as absence of carrier, so that a Z channel is there when the external sources of this system transmit very low powers for receptors, although sporadically the power could be high because the system has a high immunity to noise.

In similar manner to the previous examples, pseudo-random slots are assigned to each channel, so that only authorized network devices can decrypt the channel. To each channel is assigned a non-linear pseudo-random generator algorithm (not necessarily the same). Two or more channels must share the secret password (usually the seed) of the pseudo-random numbers generator PRNG to make predictable the slot sequence and to make possible the communication between them. The PRNG must be cryptographically secure, for example the *self-shrinking* generator algorithm and the AES in PRBS mode. The preferred one in the present invention is the *shrinking* generator due to its higher simplicity in its implementation.

The device of the invention consists of a data link layer, which is implemented using *Time Hopping* CDMA, where each of the 128 possible network devices send bits to a slot selected at random from among the 235 slots, therefore the collisions between the different network devices occur and error correction techniques must be used to ensure error-free transmission of data. In this case Reed-Solomon was used in conjunction with a scrambler.

A given network device X can receive messages from other network device Y if X has the password from Y, and vice versa, therefore any network device can receive the transmissions from all others when disposing of their passwords.

The data flows from the network devices are encoded with the error correction technique, in this case the Reed-Solomon code with a scrambler was used and additionally Bloom filters.

### Example 3

An implementation was performed using air as a physical media and sound waves. The transducers are microphones for the detection and speakers for the transmission. The bit '1' were represented by pulses of 19.2 kHz frequency and with a bit width of 1041.6 µs (which matches with the slot), considering a return to zero encoding with a duty cycle of 30%, while the bits '0' were represented with absence of signal. On the receiver the signal was filtered with a Butterworth passband of order 2 and 2 kHz bandwidth centered on the carrier of 19.2 kHz. This establishes a channel capacity of 960 bps.

The used system configuration was as follow: 16 as maximum number of clients, length frame of 35 bits, number of filters Bloom K=10, resulting in a system with an effective transmission rate (deducting the error correction) of 15.3 bps per customer. A re-encoding for symbols of 16 bits expanded to 400 bits was used.

This experience was mounted on a transmitting computer and other one receiving, while the noise of other 15 communications was included. The results show the technical feasibility of the system as it was possible to transmit information from one computer to the other one, 200 kb for each probe. The measured error rate was 3.72 E-4 bits per second, which is acceptable in relation to the transmission rate of each individual channel (an error every 175 seconds). It is important to underline that the performance of the system with sound makes the feasibility of implementing it at higher speeds, as in the case of implementation on optical fiber a FPGA (*"Field -Programmable Gateway Array",* matrix of programmable gateway by electric field) will be used.

For all the exposed and illustrated herein it is evident the safety of the data provided by the device and method of the present invention, as observing the data flow from each client terminal within the shared medium is not possible to decode the transmitted information, being the probability of decoding correctly the data flow less than 1E-38 (the inverse of two raised to the number of client terminals, in this case 128), therefore it is not possible to predict the sequence of the random generator in a reasonable computational time.

### Example 4

In this example the implementation of the invention device is described in an optical network, with data privacy protection at upload (upstream) and data download (downstream).

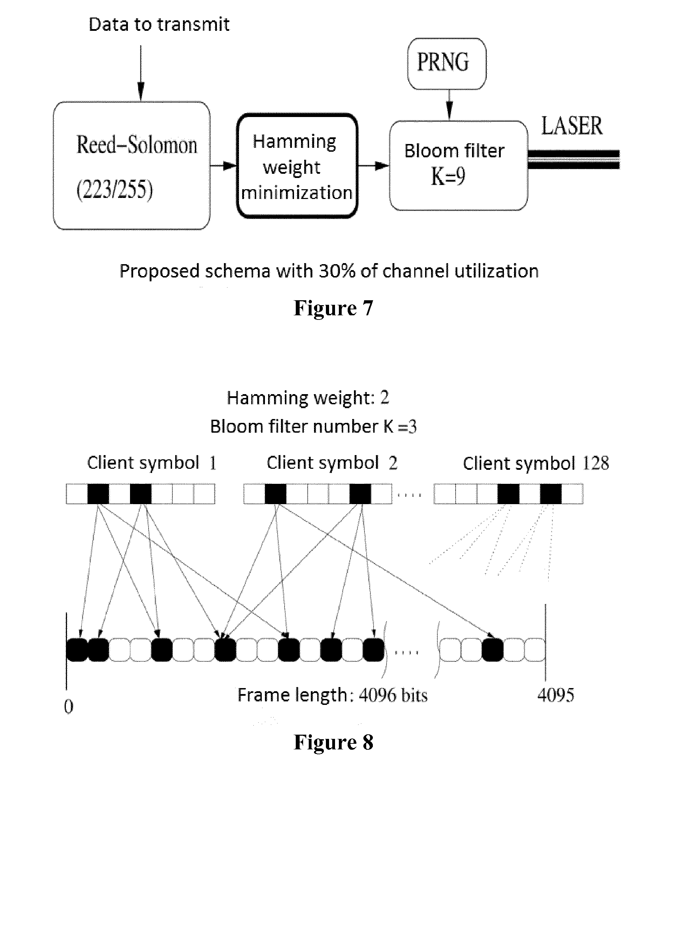

Unlike Example 1 the privacy is assured in the upstream. There are two main variations on this example that allow this functionality: the extension of the frame length and the replacement of the scrambler stage for a more complex, explained in the next paragraph, see Figure 7.

Unlike example 1, the frame length change from 235 (Example 1) to 4096 slots, allowing that a single one of these frames transmits the totality of a symbol. The purpose of the next normalization step of Hamming weight is that each input symbol becomes one with longer length, but always with identical weight. An exemplary case used in the prototype expands each 8 bits symbol (1 byte) to symbols of 24 bits (3 bytes), containing each of them two bits with value 1 and the rest with value zero. This conversion between the two symbols is typically performed using a table. The receiver stage performs the inverse conversion from the expanded 24-bits symbol to the original 8-bits symbol. See Figure 8.

Each bit of the expanded symbol is encoded in the Bloom filter with parameter K=9, so that each bit is replicated 9 times at a different position selected by the PRNG, but always within the same frame. This process is replicated in the receiver stage with a synchronized PRNG to recover the bits of the symbol.

Using this method, an attacker with access to all the data of the optical fiber at any transmission point which do not know the PRNG seed, will not be able to extract any information from the data stream. The security of the entire system depends on the quality of the PRNG.

Having thus described and illustrated the present invention, different modifications and variations will be evident for those skilled experts in the art, based on the present specification and the ordinary knowledge in the art. All mentioned modifications and variations are included within the scope and spirit of the present invention.

## Claims

1. A device for secure data transmission over Z channels through code division multiple access (CDMA), **characterized by** comprising:
a. means for re-encoding data;
b. means for encoding through error correction techniques;
c. means for transmission using Time-Hopping CDMA *(Time-Hopping)* based on a nonlinear pseudo-random generator with secure password and Bloom filters; and
d. means for channel modulation.

2. A device according to the claim 1, **characterized in that** the means for re-encoding data comprises the use of symbols of greater length than the minimum.

3. A device according to the claim 1, **characterized in that** Hamming weight minimization is used to achieve data re-encoding.

4. A device according to claim 1, **characterized in that** the error correction technique is selected from the group comprising techniques such as Reed-Solomon with scrambler, low density parity check (LDPC) and BCH.

5. A device according to claim 1, **characterized in that** the communication channel is selected from the group comprising: optical channel and wireless channel.

6. A device according to claim 1, **characterized in that** the device is integrated into an optical network.

7. A device according to claim 6, **characterized in that** the optical network shows an amplification stage.

8. A device according to claim 7, **characterized in that** the optical amplifiers are erbium doped fiber amplifiers (EDFA).

9. A device according to claim 6, **characterized in that** the optical network has a star-type coupler without amplification stage.

10. A device according to claim 7, **characterized in that** the optical network shows a bus or ring topology.

11. A device according to any of claims 5 to 10, **characterized in that** the device is integrated into an optical network and the optical modulation of the channel is implemented through a laser diode.

12. A device according to claim 1, **characterized in that** it is integrated into a wireless network.

13. A device according to claim 12, **characterized in that** the wireless channel modulation is performed using 100% amplitude modulation (AM) of a carrier.

14. A device according to claim 12, **characterized in that** the transmission on the wireless channel is performed by sound or ultrasound.

15. A device according to claim 1, **characterized in that** the non linear pseudo-random generator with secure password *Time-Hopping* CDMA is a *self-shrinking* generator.

16. A device according to claim 1, **characterized in that** it is integrated with access networks.

17. A device according to claim 1, **characterized in that** it comprises:
a. means for re-encoding data;
b. means for encoding using error correction codes, of the Reed-Solomon with scrambler-type;
c. means for transmission employing *Time-Hopping* CDMA based on a pseudo-random non linear generator with secure password, greater than 2 to the power 128, and Bloom filters;
d. means for channel modulation, both optical and wireless ;
e. means for channel demodulation, both optical and wireless;
f. means for decoding employing *Time-Hopping* CDMA based on a nonlinear pseudo-random generator with secure password, greater than 2 to the power 128, and Bloom filters;
g. means for decoding the spread symbols;
h. means for decoding using error correction codes, of the Reed-Solomon with scrambler-type.

18. A method for secure data transmission over Z channels employing CDMA, **characterized in that** it comprises:
a. entering data at the data linkaccess layer;
b. re-encoding of data through the expansion of its symbols;
c. adding error correction; transmitting employing *Time Hopping* CDMA and Bloom filter; and modulating the channel, and
d. at the physical layer, redistribution of data traffic coming from each customer to others, and
e. amplifying optical power.

19. A method according to claim 18, **characterized in that** the error correction is performed using a technique selected from the group comprising: Reed-Solomon with scrambler, low density parity check (LDPC) and BCH (by its creators: Bose, ray-Chaudhuri and Hocquenghem).

20. A method according to claim 18, **characterized in that** an optical network is used, which shows an amplification stage.

21. A method according to claim 20, **characterized in that** the optical amplifiers are Erbium doped fiber amplifiers (EDFA).

22. A method according to claim 20, **characterized in that** an optical network is using a star-type coupler without amplification stage.

23. A method according to any one of claims 20 to 22, **characterized in that** the optical modulation of the channel is achieved by the modulation so that the '1' is represented by the presence of light and the '0' by the absence thereof.

24. A method according to claim 18, **characterized in that** the wireless modulation of the channel is performed using a 100% amplitude modulation (AM) for the '1' bit and 0% for the '0' bit.

25. A method according to claim 18, **characterized in that** transmission in the wireless channel is performed by sound or ultrasound.

26. A method according to claim 18, **characterized in that** slot assignment of CDMA *Time-Hopping* is performed through a self-shrinking generator.

27. A method according to claim 18, **characterized in that** it applies to access networks.

28. A method according to claim 18, **characterized in that** amplification of the optical power in optical networks utilizes star couplers for all of the client terminals or other ring or bus type topologies.
